# EUROPÄISCHE PATENTSCHRIFT

(11) **EP 0 952 071 B1**
(45) Veröffentlichungstag und Bekanntmachung des Hinweises auf die Patenterteilung: **19.05.2004**
(21) Anmeldenummer: 99105723.3
(22) Anmeldetag: 20.03.1999
(51) Int. Cl.: B62D 55/10, B62D 55/30

(54) **Fahrschiff für Raupenfahrzeuge**
Bogies for crawler
Bogies pour véhicule à chenilles

(30) Priorität: 22.04.1998 DE 19817967
(43) Veröffentlichungstag der Anmeldung: 27.10.1999
(73) Patentinhaber: Intertractor GmbH, 58285 Gevelsberg (DE)
(72) Erfinder: Becker, Harald, 46049 Oberhausen (DE); Tintrup, Frank, 44628 Herne (DE); Wagner, Gerhard, 58300 Wetter (DE)
(74) Vertreter: Köchling, Conrad, Dipl.-Ing.

(56) Entgegenhaltungen:
- EP-A- 0 799 760
- WO-A-95/02533
- US-A- 3 343 889
- US-A- 4 043 417

## Beschreibung

Die Erfindung betrifft ein Fahrschiff für Raupenfahrzeuge, bestehend aus einem rahmenartigen oder kastenartigen Chassis mit am einen Ende gelagerten Antriebsrädern, am anderen Ende federnd gelagerten und geführten Leiträdern und unterseitig gelagerten Laufrollen, um welche ein endloses Antriebselement (Kette, Raupe, Gurt) umläuft, wobei eine Federeinheit ggf. mit einem Zuganker kombiniert in das rahmenartige oder kastenartige Chassis eingebaut ist, ohne daß deren Teile über die Oberseite oder die Unterseite des Chassis vorragen, das Leitrad mittels der Federeinheit gespannt und abgefedert ist, die zwischen Gestellteilen des Leitrades und Gestellteilen des Chassis eingespannt ist, und die Federeinheit gegebenenfalls mit dem Zuganker zum Vorspannen der Federeinheit kombiniert ist, wobei ferner die Mittellängsachse der Federeinheit, die gleich der Wirkrichtung verläuft, parallel zur Leitradführung gerichtet ist und die Drehachse des Leitrades schneidet oder versetzt daran vorbei verläuft.

Ein derartiges Fahrschiff ist beispielsweise in der EP 0 052 310 A1 gezeigt. Entsprechende Leitradführungen und Federungen sind beispielsweise in der DE 90 11 884 U1 und in der gattungsgemäßen WO 95/02 533 beschrieben. Bei üblichen, relativ hochbauenden Fahrschiffen kann die Anordnung des Leitrades, der Leitradführung und der Leitradfederung derart ausgeführt sein, daß quasi eine parallele Führung und parallele Federung zur Aufstandsebene des Fahrschiffes erreicht ist, so daß ein Einfedern und Ausfedern des Leitrades parallel zur Fahrtrichtung des Fahrschiffes erfolgen kann.

Es sind auch flachbauende Fahrschiffe bekannt, bei denen eine derartige Anordnung von Antriebsradführungen und Federung nicht möglich ist. Bei einer Ausrichtung dieser Elemente parallel zur Aufstandsebene des Fahrschiffes läge hierbei die Federeinheit in einem Bereich, der von den Laufrollen des Fahrschiffes belegt ist. Aus diesem Grunde ist man im Stand der Technik dazu übergegangen, bei flachbauenden Fahrschiffen eine versetzte Anordnung der Federung vorzunehmen. Dabei ist die Federung quasi zur Oberseite des Fahrschiffes parallel versetzt zur Leitradführung angeordnet, so daß der Einbau der Federeinheit nicht durch die am Fahrschiff angeordneten Laufrollen beeinträchtigt ist.

Diese über den Laufrollen liegende Anordnung der Federeinheit bei flachbauenden Fahrschiffen ist insofern nachteilig, als bei Belastung des Leitrades ein Drehmoment auf die mit der Leitradführung gekoppelte Federeinheit einwirkt. Hierdurch tritt ein extremer Verschleiß an der Leitradführung auf, da die als Führung dienenden Elemente, beispielsweise Gleitstücke, verkanten, was zu einem hohen Verschleiß führt. Auch ist der Zuganker, der Bestandteil der Federeinheit ist durch das auftretende Moment erheblich belastet, so daß in der Praxis häufig ein Zugankerbruch auftritt, insbesondere ein Kopf des Zugankers abreißt, an dem sich das eine Ende der Feder der Federeinheit abstützt. Die Feder der Federeinheit ist häufig eine Schraubendruckfeder.

Ausgehend von diesem Stand der Technik liegt der Erfindung die Aufgabe zugrunde, ein Fahrschiff gattungsgemäßer Art zu schaffen, welches insbesondere bei flacher Bauweise die Unterbringung des Leitrades samt Leitradführung und Federeinheit ermöglicht, ohne daß der Einbau durch die Laufrollen des Fahrschiffes behindert wäre, wobei der Verschleiß insbesondere in der Leitradführung gemindert werden soll und ein Bruch oder Reißen des Zugankers aufgrund auftretender Biegemomente weitestgehend vermieden wird.

Zur Lösung dieser Aufgabe schlägt die Erfindung vor, daß die Federeinheit und die Leitradführung mit dem daran gehalterten Leitrad gegenüber der Chassislängsachse geneigt angeordnet ist, so daß das Leitrad beim Einfedern der Federeinheit nach schräg oben in Richtung der Chassisoberseite ausweichen kann und beim Ausfedern nach schräg unten in Richtung der Chassisunterseite vorlaufen kann.

Die Schräganordnung der Federeinheit und Leitradführung hat den wesentlichen Vorteil, daß das Leitrad bei einer Belastung durch auftretende Zugkräfte an dem Antriebselement (Kette, Raupe, Gurt) nach schräg oben ausweichen kann, was grundsätzlich für den Verschleiß vorteilhaft ist, da beispielsweise beim Überfahren eines auf den Boden liegenden Hindernisses oder dergleichen ohnehin keine Kräfte parallel zur Aufstandsebene des Fahrschiffes, sondern schräg nach oben zielende Kräfte auftreten, die auf das Leitrad einwirken. Das Leitrad kann daher relativ zwängungsfrei ausweichen, ohne daß die Leitradführung übermäßig momentenbelastet ist und ohne daß die Federeinheit samt Zuganker übermäßig auf Biegung durch ein Moment belastet wird. Ein weiterer wesentlicher Vorteil dieser Anordnung liegt darin, daß gerade bei flachbauenden Fahrschiffen der vorhandene Einbauraum zwischen der Oberseite des Chassis des Fahrschiffes und den an der Unterseite des Fahrschiffes angeordneten Laufrollen besonders gut genutzt werden kann, um die Federeinheit in diesem Freiraum unterzubringen, ohne daß der Einbau durch die Laufrollen behindert wäre. Dabei ist desweiteren wesentlich , daß die Federeinheit gegebenenfalls samt Zuganker nicht über die Oberseite des Fahrschiffes vorragt, da hierdurch die gewünschte flache Bauform des Fahrschiffes nicht gewährleistet wäre.

Bevorzugt ist vorgesehen, daß der Neigungswinkel zur Vorderseite und Unterseite des Chassis im spitzen Winkel abfallend verläuft, wobei der zwischen der Chassislängsachse und der Federeinheit/Leitradführung eingestellte Neigungswinkel vorzugsweise kleiner als 10° ist.

Besonders bevorzugt ist vorgesehen, daß der Versatz zwischen der Mittellängsachse der Federeinheit und der Mittellängsachse der Leitradführung minimiert ist, vorzugsweise dem Wert "Null" angenähert ist oder gleich "Null" ist.

Obwohl eine Minimierung des Versatzes bevorzugt ist und besonders bevorzugt eine koaxiale Ausrichtung vorzusehen ist, kann aus Gründen des flachen Einbauraumes zwischen Oberseite und Unterseite des Chassis ein geringer Versatz erforderlich sein. Dies führt aber dennoch nicht zu dem schnellen Verschleiß, der im Stand der Technik auftritt, und auch nicht zum Reißen des Zugankers, weil durch die schräg geneigte Anordnung von Leitradführung und Federung ein weitestgehend zwängungsfreies Einfedern und Ausfedern bei normalen Fahrzuständen des Fahrschiffes erreicht ist.

Schematisierte Ausführungsbeispiele der Erfindung sind in der Zeichnung dargestellt und im folgenden näher beschrieben.

Es zeigt:
- Figur 1: ein erfindungsgemäßes Fahrschiff in Seitenansicht, teilweise schematisiert;

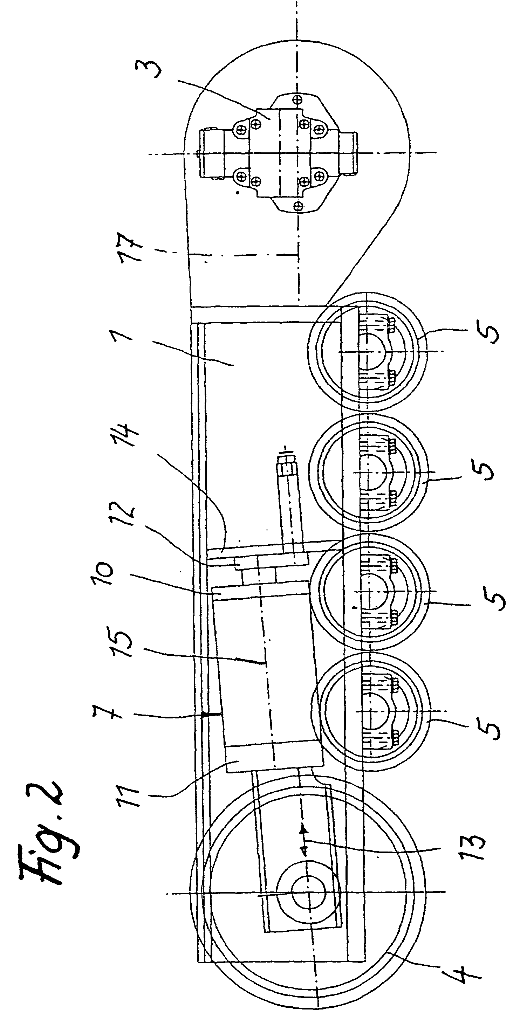

- Figur 2: eine Variante in der Ansicht gemäß Figur 1 gesehen;
- Figur 3: eine ausschnittsweise Darstellung eines Fahrschiffes gemäß Stand der Technik.

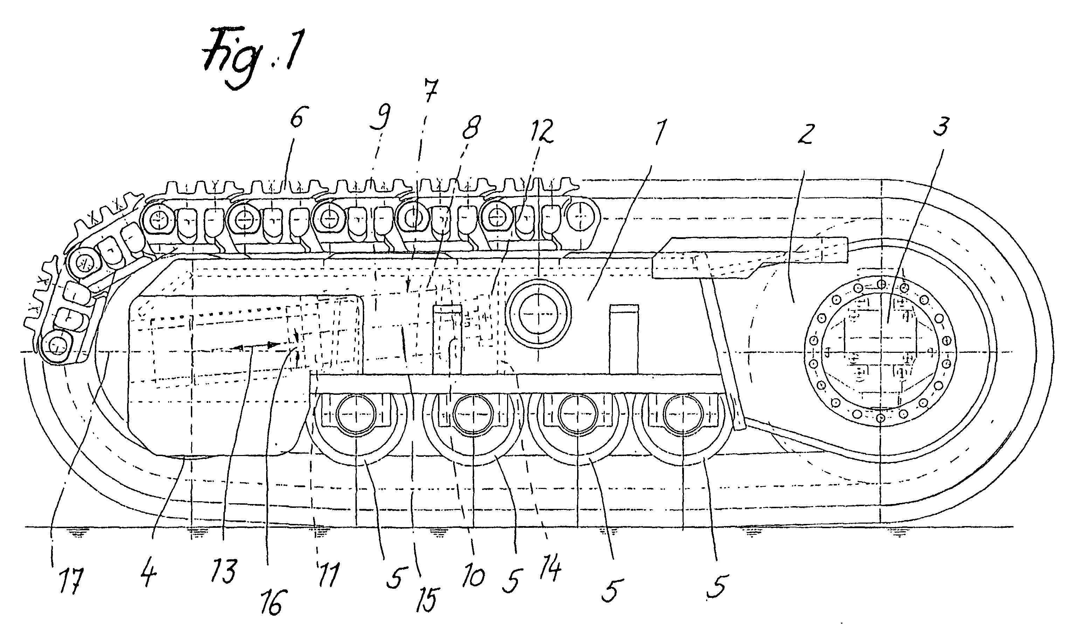

In Figur 1 ist ein Fahrschiff für Raupenfahrzeuge gezeigt. Dieses besteht aus einem Chassis 1, an dessen einem, beispielsweise in Fahrtrichtung hinten gelegenen Ende ein Antriebsrad 2 mit Antriebsaggregat 3 gelagert ist, während am anderen Ende des Chassis 1 ein Leitrad 4 federnd gelagert und geführt angeordnet ist. Unterseitig des Chassis 1 sind Laufrollen 5 drehbar gelagert. Das aus den Rollen gebildete System ist von einem Endlosen Antriebselement 6 umschlungen, welches im Ausführungsbeispiel nach Figur 1 aus einer Raupenkette besteht. Die Raupenketten sowie Antriebs- und Führungsmittel sind jeweils paarweise an beiden Längsseiten des Fahrschiffes angeordnet.

Das Leitrad 4 ist mittels einer in das Chassis zwischen dessen Oberseite und Unterseite eingebauten Federeinheit 7 gespannt und abgefedert. Die Federeinheit 7 besteht aus einer Schraubendruckfeder 8 und einem hydraulischen Vorspannelement 9. Die Schraubenfeder 8 ist zwischen Anschlagplatten 10,11 vorgespannt gehalten, wobei die Vorspannung durch das Vorspannelement 9 erfolgt. Durch das Vorspannelement wird die Platte 10 von dem chassiseitigen Lager 12 weggedrückt und die Feder vorgespannt und in dieser Lage arretiert. Das Leitrad 4 ist in Richtung des Pfeiles 13 geführt, beispielsweise durch Gleitstücke, die in entsprechenden Führungsschienen des Chassis 1 geführt sind, die ebenfalls nicht über die Oberseite oder die Unterseite des Chassis 1 vorragen.

Auf diese Weise stützt sich die Federeinheit 7 zwischen Gestellteilen des Chassis (bei 14) und Gestellteilen des Leitrades 4 (bei 11) ab. Die Mittellängsachse der Federeinheit 7, die bei 15 angegeben ist verläuft geringfügig parallel versetzt zur Mittellängsachse der Leitradführung, die durch den Pfeil 13 angegeben ist. Je nach vorhandenem Einbauraum zwischen Oberseite und Unterseite des Chassis 1 kann auch die Achse 15 mit der Achse 13 fluchten.

Die Federeinheit 7 und die Leitradführung (verdeutlicht durch den Pfeil 13) ist mit dem daran gehalterten Leitrad 4 gegenüber der Chassilängsachse geneigt angeordnet, so daß das Leitrad 4 beim Einfedern der Federeinheit 7 nach schräg oben in Richtung zur Chassioberseite ausweichen kann und beim Ausfedern schräg nach unten in Richtung zum Erdboden oder zur Aufstandsebene hin vorlaufen kann.

Der Neigungswinkel 16 verläuft zur Vorderseite des Chassis 1 im spitzen Winkel abfallend, wobei zwischen der Chassilängsachse 17 und der Federeinheit/Leitradführung ein Winkel von ca. 10° oder weniger als 10° eingestellt ist. Durch diese Ausbildung wird erreicht, daß der Verschleiß bezüglich der Leitradführung 13 minimiert ist und auch der Zuganker (insbesondere im Bereich 10) nicht oder nur unwesentlich durch Momente belastet wird. Zudem wird durch diese Anordnung eine flache Bauweise des Fahrschiffes ermöglicht, ohne daß der Einbauraum insbesondere für die Federeinheit 7 durch die Laufrollen 5 eingeengt ist.

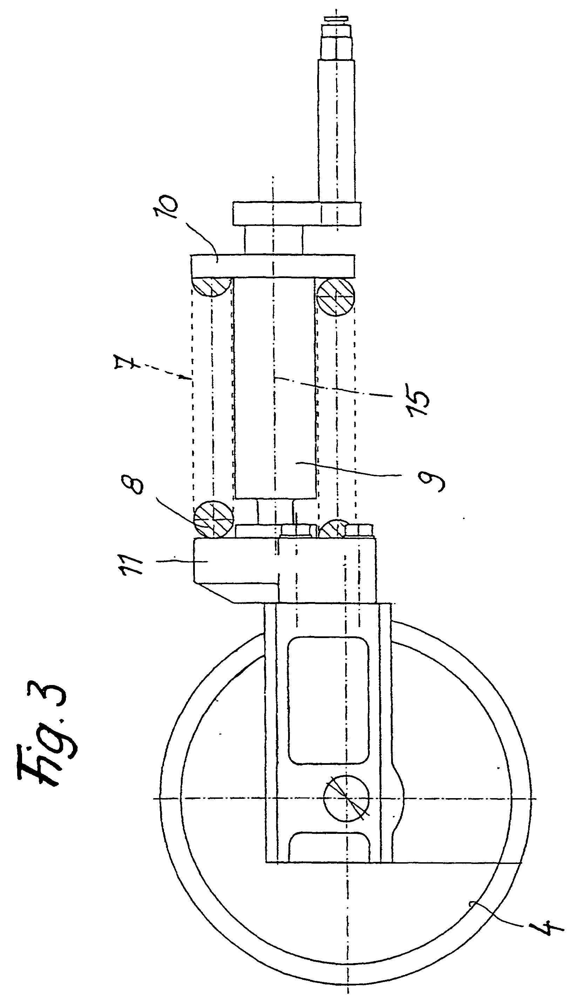

In Figur 3 ist eine aus dem Stand der Technik bekannte Lösung gezeigt, bei der die Bewegungsrichtung der Leitradführung 13 und der Federeinheit 7 horizontal, also parallel zur Mittellängsachse des Fahrschiffes ausgerichtet ist. Dabei ist die Mittellängsachse 15 der Federeinheit gegenüber der Mittellängsachse der Leitradführung (bei 13) erheblich versetzt. Dies erfolgt aus dem Grunde, daß eine solche Einheit in ein flachbauendes Fahrschiff eingebaut werden soll. Der Versatz der Federeinheit quasi relativ nach oben ist erforderlich, um die Federeinheit oberhalb der Laufrollen 5 einbauen zu können. Aus dieser bekannten Konstruktion resultiert der Nachteil, daß bei Belastungen des Leitrades ein Moment auf die Leitradführung einwirkt, welches zu einer Verkantung von Gleitstücken oder dergleichen führt und einen hohen Verschleiß zur Folge hat. Auch der Zuganker, insbesondere der Bestandteil 10, der Federeinheit 7 ist erheblich bruchgefährdet.

Diese Nachteile werden durch die erfindungsgemäße Konstruktion überwunden.

## Patentansprüche

1. Fahrschiff für Raupenfahrzeuge, bestehend aus einem rahmenartigen oder kastenartigen Chassis (1) mit am einen Ende gelagerten Antriebsrädern (2), am anderen Ende federnd gelagerten und geführten Leiträdern (4) und unterseitig gelagerten Laufrollen (5), um welche ein endloses Antriebselement (6) umläuft, wobei eine Federeinheit ggf. mit einem Zuganker kombiniert in das rahmenartige oder kastenartige Chassis eingebaut ist, ohne daß deren Teile über die 0berseite oder die Unterseite des Chassis vorragen, das Leitrad (4) mittels der Federeinheit (7) gespannt und abgefedert ist, die zwischen Gestellteilen (11) des Leitrades und Gestellteilen (10) des Chassis eingespannt ist, und die Federeinheit gegebenenfalls mit dem Zuganker zum Vorspannen der Federeinheit kombiniert ist, wobei ferner die Mittellängsachse (15) der Federeinheit, die gleich der Wirkrichtung verläuft, parallel zur Leitradführung (13) gerichtet ist und die Drehachse des Leitrades schneidet oder versetzt daran vorbei verläuft, **dadurch gekennzeichnet, daß** die Federeinheit (7) und die Leitradführung (13) mit dem daran gehalterten Leitrad (4) gegenüber der Chassislängsachse (17) geneigt angeordnet ist, so daß das Leitrad (4) beim Einfedern der Federeinheit (7) nach schräg oben in Richtung der Chassisoberseite ausweichen kann und beim Ausfedern nach schräg unten in Richtung der Chassisunterseite vorlaufen kann.

2. Fahrschiff nach Anspruch 1, **dadurch gekennzeichnet, daß** der Neigungswinkel zur Vorderseite und Unterseite des Chassis (1) im spitzen Winkel abfallend verläuft, wobei der zwischen der Chassislängsachse (17) und der Federeinheit (7)/Leitradführung (13) eingestellte Neigungswinkel (16) vorzugsweise kleiner als 10° ist.

3. Fahrschiff nach einem der Ansprüche 1 oder 2, **dadurch gekennzeichnet, daß** der Versatz zwischen der Mittellängsachse (15) der Federeinheit (7) und der Mittellängsachse der Leitradführung (13) minimiert ist, vorzugsweise dem Wert "Null" angenähert ist oder gleich "Null" ist.

## Claims

1. A bogie for crawlers, consisting of a frame-type or box-type chassis (1), having drive wheels (12) mounted on one end, front wheels (4) spring-mounted and guided at the other end and track rollers (5) mounted on the under side, around which an endless drive element (6) passes,
wherein a spring unit possibly combined with a tension rod is installed into the frame-type or box-type chassis without its parts protruding beyond the upper side or under side of the chassis, the front wheel (4) is tensioned and sprung by means of the spring unit (7), which is clamped between frame parts (11) of the front wheel and frame parts (10) of the chassis, and the spring unit is possibly combined with the tension rod for pretensioning of the spring unit,
wherein, moreover, the central longitudinal axis (15) of the spring unit, which runs identically to the effective direction, is directed parallel to the front wheel guide (13) and intersects the axis of rotation or runs past it in offset manner,
**characterised in that** the spring unit (7) and the front wheel guide (13) with the front wheel (4) retained thereon is disposed inclined in relation to the longitudinal axis (17) of the chassis, so that the front wheel (4) can yield obliquely upwards in the direction of the upper side of the chassis when the spring unit (7) dives and can run obliquely downwards in the direction of the under side of the chassis when it lifts.

2. A bogie according to Claim 1,
**characterised in that** the angle of inclination to the front side and under side of the chassis (1) slopes downward at an acute angle, the angle of inclination (16) set between the longitudinal axis (17) of the chassis and the spring unit (7)/front wheel guide (13) preferably being less than 10°.

3. A bogie according to one of Claims 1 or 2,
**characterised in that** the offset between the central longitudinal axis (15) of the spring unit (7) and the central longitudinal axis of the front wheel guide (13) is minimised, preferably is brought close to the value "zero" or is equal to "zero".

## Revendications

1. Bogie pour véhicules à chenilles, comprenant un châssis (1) en forme de cadre ou de caisson, avec des roues de commande (2) logées au niveau d'une extrémité, des roues de guidage (4) logées et suspendues sur ressort au niveau de l'autre extrémité, et des galets de roulement (5) logés sur le côté inférieur et autour desquels défile un élément d'entraînement (6) continu, bogie, dans lequel une unité à ressort (7), combinée le cas échéant à un hauban, est montée dans le châssis (1) en forme de cadre ou de caisson, sans que des parties de ladite unité à ressort s'avancent en saillie sur le côté supérieur ou le côté inférieur du châssis (1), la roue de guidage (4) est tendue et suspendue au moyen de l'unité à ressort (7), qui est montée entre des éléments de support (11) de la roue de guidage (4) et des éléments de support (10) du châssis (1), et l'unité à ressort (7) est combinée, le cas échéant, avec le hauban pour la précontrainte de l'unité à ressort (7), l'axe longitudinal médian (15) de l'unité à ressort (7), qui s'étend dans le même sens que la direction active, étant alignée parallèlement au guidage (13) de la roue de guidage et coupant l'axe de rotation de la roue de guidage (4) ou passant de manière décalée le long de celui-ci, **caractérisé en ce que** l'unité de ressort (7) et le guidage (13) de la roue de guidage, avec la roue de guidage (4) logée contre celui-ci, sont inclinés par rapport à l'axe longitudinal du châssis (1), de telle sorte que la roue de guidage (4) au moment de la compression de l'unité à ressort (7) peut s'écarter en oblique vers le haut en direction du côté supérieur du châssis (1) et en cas de relâchement du ressort peut s'avancer en oblique vers le bas en direction du côté inférieur du châssis (1).

2. Bogie selon la revendication 1, **caractérisé en ce que** l'angle d'inclinaison par rapport au côté avant et au côté inférieur du châssis (1) forme un angle aigu décroissant, l'angle d'inclinaison défini entre l'axe longitudinal du châssis (17) et l'unité de ressort (7) ou le guidage (13) de la roue de guidage, étant de préférence inférieur à 10°.

3. Bogie selon la revendication 1 ou 2, **caractérisé en ce que** le décalage entre l'axe longitudinal médian (15) de l'unité à ressort (7) et l'axe longitudinal médian du guidage (13) de la roue de guidage est réduit au minimum, s'approche de préférence de la valeur « zéro » ou est égal à « zéro ».
